# EUROPÄISCHE PATENTSCHRIFT

(11) **EP 2 460 448 B1**
(45) Veröffentlichungstag und Bekanntmachung des Hinweises auf die Patenterteilung: **07.01.2015**
(21) Anmeldenummer: 11190457.9
(22) Anmeldetag: 24.11.2011
(51) Int. Cl.: A47J 31/52, A47J 31/56, B67D 1/00

(54) **Getränkeautomat**
Beverage machine
Automate à boissons

(30) Priorität: 03.12.2010 DE 102010062398
(43) Veröffentlichungstag der Anmeldung: 06.06.2012
(73) Patentinhaber: WMF Württembergische Metallwarenfabrik AG, 73309 Geislingen/Steige (DE)
(72) Erfinder: Startz, Armin, 89197 Weidenstetten (DE); Kiefer, Alexander, 73329 Kuchen (DE); Dollner, Sander, 89079 Ulm-Wiblingen (DE)
(74) Vertreter: BRP Renaud & Partner mbB Rechtsanwälte Patentanwälte Steuerberater

(56) Entgegenhaltungen:
- EP-A1- 2 386 229
- GB-A- 2 416 757
- US-B1- 7 820 948

## Beschreibung

Die vorliegende Erfindung betrifft einen Getränkeautomaten mit zumindest einem Sensor zur Temperaturerfassung, gemäß dem Oberbegriff des Anspruchs 1.

In Getränkeautomaten und insbesondere in Kaffeemaschinen gibt es zahlreiche Sensoren, die insbesondere eine Temperatur an einer Dampflanze detektieren und an eine Steuerungseinrichtung übermitteln. Die dabei derzeit verwendeten Sensoren sind üblicherweise als Thermoelemente oder als NTC-Fühler ausgebildet und fest verkabelt. Ein Einsatz der bekannten Sensoren in demontierbaren Komponenten, wie beispielsweise bei einem Wassertank oder einem Milchvorratsbehälter, erfordert hohe Anforderungen an die Kopplung bzw. die Ausführung der Messstelle, um genaue und reproduzierbare Messergebnisse zu erhalten.

Die nachveröffentlichte EP 2 386 229 A1 offenbart einen Milchkühler mit drahtloser Temperaturerfassung an der Milchlanze. GB 2 416 757 offenbart eine Getränkekartusche mit RFID-Chip, welcher auch die Temperatur erfasst. US 7 820 948 offenbart eine drahtlose Kommunikation verschiedener Komponenten eines Getränkeautomaten, wobei auch Temperaturdaten übertragen werden.

Die vorliegende Erfindung beschäftigt sich daher mit dem Problem, für einen gattungsgemäßen Getränkeautomaten, eine verbesserte oder zumindest eine alternative Ausführungsform anzugeben, die insbesondere konstruktiv einfach aufgebaut ist und gleichzeitig eine genaue Temperaturerfassung ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, zur Erfassung einer Temperatur in einem Getränkeautomaten einen Sensor zu verwenden, der zur drahtlosen Datenübertragung ausgebildet ist, beispielsweise einen als RFID-Chip ausgebildeten Sensor, und diesen in eine Wand einer Leitung oder eines Behälters zu integrieren, in welcher/welchem dasjenige Fluid, beispielsweise Wasser oder Milch, fließt/befindet, dessen Temperatur ermittelt werden soll. Ein derartiger, insbesondere kapazitiv arbeitender RFID-Chip ist zur drahtlosen Signalübertragung an eine Steuerungseinrichtung in der Lage und kann dadurch direkt an der Messstelle eingebaut und zugleich zur Steuerung von insbesondere Aufschäumprozessen verwendet werden. Durch seine Integration in eine Wand der Leitung bzw. des Behälters ist er zudem zumindest partiell durch eine Materialschicht überdeckt und geschützt und kann dadurch insbesondere auch in abnehmbaren Komponenten, wie beispielsweise einem Milchschäumer oder einem Milchbehälter, eingesetzt werden. Der als RFID-Chip ausgebildete Sensor ist in der Lage, die Temperatur berührungslos durch eine dünne, ihn überdeckende, Schicht der Leitung bzw. des Behälters, insbesondere des Milchschäumers in Situ zu messen und draht-/berührungslos an obengenannte Steuerungseinrichtung zu übermitteln. Der Kunde kann in diesem Fall beispielsweise den Milchschäumer einfach abnehmen und reinigen, selbst in der Spülmaschine, ohne dass er befürchten muss, dass der RFID-Chip hierbei Schaden nimmt. Durch die Kennung des RFID-Chips ist es auch möglich direkt zu erkennen, ob der Milchschäumer montiert wurde und insbesondere ob auch der richtige Milchschäumer montiert wurde. Denkbar ist hierbei beispielsweise, dass verschiedene Milchschäumer genutzt werden können, z.B. ein Powerschäumer und ein Normalschäumer, welche mittels des RFID-Chips einfach identifiziert werden können, woraufhin mit dieser Information die entsprechenden Parameter, beispielsweise eine Luftmenge, entsprechend angepasst werden können. Von besonderem Vorteil bei einem derartigen als RFID-Chip ausgebildeten Sensor ist, dass dieser nicht über ein Kabel mit Energie versorgt werden muss, sondern die Betriebsenergie mittels hochfrequenter elektromagnetischer Wellen erhält. Eine interne Verkabelung in dem Getränkeautomaten kann dadurch eingespart werden.

Selbstverständlich kann dabei der zumindest eine Sensor im Getränkeautomat oder aber auch in anderen Peripheriegeräten, wie beispielsweise Beistellkühlern oder Behältern, Thermoskannen, Beuteln, Transportbehälter, Milchtopf, Aufschäumtopf, etc. angeordnet sein. Insbesondere ist dabei denkbar, dass der zumindest eine Sensor im Bereich eines Wassertanks oder eines Milchtanks angeordnet ist und in dieser Lage nicht nur die Temperatur des Wassers bzw. der Milch, sondern vielmehr auch einen Füllstand des Behälters detektieren kann. Durch die vorzugsweise vollständige Einbettung des wenigstens einen Sensors in ein Material des Behälters bzw. der Leitung, kann dieser beispielsweise bei der Herstellung des Behälters mit Kunststoff umspritzt werden und erhält dadurch eine besonders geschützte Lage. Die verdeckte Lage bietet darüber hinaus den großen Vorteil, dass der Sensor keine gesteigerten Hygieneanforderungen erfüllen muss, da er nicht in direktem Kontakt mit der Milch bzw. dem Wasser oder einem anderen Nahrungsmittel steht.

Mit dem erfindungsgemäß als RFID-Chip ausgebildeten Temperatursensor kann insbesondere auch die Ausgabetemperatur bzw. die Schaumqualität an Milchschäumern verbessert werden, da ein derartiger Sensor, sofern er direkt an einem Schäumkopf angeordnet ist, in der Lage ist, dort die aktuell anliegende Temperatur zu messen und direkt an eine Steuerungseinrichtung zu übermitteln, die daraufhin den Schäumprozess nachreguliert. Mit bisherigen Sensoren, beispielsweise Thermoelementen oder NTC-Fühlern, ist eine Messung der Temperatur direkt am Schäumkopf nicht oder nur sehr schwer möglich, da bis dorthin einerseits eine Verkabelung geführt werden müsste und andererseits der NTC-Fühler oder auch das Thermoelement hohen hygienischen Anforderungen ausgesetzt wäre, da es in direktem Kontakt mit der Milch steht. Außerdem wird insbesondere dieser Bereich vom Endkunden üblicherweise selbst gereinigt, so dass dieser abnehmbar ausgestaltet ist, was die Verwendung bisher bekannter Sensoren ebenfalls erschwert. Gleichfalls wird insbesondere der Schäumkopf zum Reinigen vom Endkunden nicht nur entnommen, sondern vielmehr auch zum Teil zerlegt, was bei extern angebrachten Temperatursensoren bisheriger Bauart zu einer hohen Ausfallrate führen würde. Durch die Integration des erfindungsgemäß als RFID-Chip ausgebildeten Temperatursensors in eine Wand des Behälters bzw. auch in eine Wand des Schäumkopfes, kann dieser äußerst geschützt angeordnet werden und widersteht dadurch selbst mechanischen und/oder chemischen Belastungen, wie sie beispielsweise bei einer Reinigung durch den Endkunden auftreten.

Mit dem erfindungsgemäß als RFID-Chip ausgebildeten Temperatursensor, der zudem einen integralen Bestandteil eines Behälters bzw. eines Schäumkopfes eines Milchschäumers oder einer Leitung bildet, kann die Temperatur nicht nur zuverlässig und exakt gemessen werden, sondern es ist darüber hinaus auch eine vergleichsweise hohe Funktionssicherheit zu gewährleisten, da der Sensor geschützt angeordnet ist. Selbstverständlich ist dabei der erfindungsgemäß als RFID-Chip ausgebildete Temperatursensor nicht nur auf die Anordnung in einem Behälter, in einer Leitung oder in dem Schäumkopf eines Milchschäumers beschränkt, sondern kann vielmehr auch an anderen, bisher für verkabelte Sensoren nur schwer erreichbaren Stellen eines Kaffee- oder Getränkeautomatens angeordnet werden.

Generell kann der zumindest eine Sensor als aktiver oder als passiver RFID-Chip ausgebildet sein, wobei aktiv bedeutet, dass der Sensor über eine eigene Energiequelle, beispielsweise eine Batterie, verfügt. Auch kann der zumindest eine Sensor einen Datenspeicher aufweisen, in welchem beispielweise nach dem Abschalten des Getränkeautomatens ein Temperaturverlauf gespeichert wird. Darüber hinaus kann der zumindest eine Sensor zur Erfassung zumindest einer weiteren Messgrößen, wie beispielsweise Druck, Entfernung, Dichte oder Feuchtigkeit ausgebildet sein, was den Einsatzbereich deutlich vergrößert. Dabei muss der Sensor nicht unbedingt im Getränkeautomaten selbst angeordnet sein, sondern kann auch in einem Peripheriegerät, wie beispielsweise einem Beistellkühler angeordnet werden.

## Patentansprüche

1. Getränkeautomat, insbesondere ein Kaffeeautomat, mit wenigstens einer Leitung, einem Behälter, einem Milchschäumer, einer Steuerungseinrichtung, einem Signalempfänger sowie mit zumindest einem Sensor zur Temperaturerfassung, der zur drahtlosen Datenübertragung ausgebildet ist, **dadurch gekennzeichnet, dass**
- der Temperatursensor als RFID-Chip ausgebildet und direkt an einem Schäumkopf des Milchschäumers zur Erfassung einer Milchtemperatur angeordnet ist,
- der Temperatursensor in der Lage ist, die dort aktuell anliegende Temperatur zu messen und direkt an die Steuerungseinrichtung zu übermitteln, die daraufhin den Schäumprozess nachreguliert.

2. Getränkeautomat nach Anspruch 1,
**dadurch gekennzeichnet,**
**dass** ein als RFID-Chip ausgebildeter Sensor zur Temperaturerfassung im Bereich einer Wasser oder einer Milch führenden Leitung angeordnet ist.

3. Getränkeautomat nach Anspruch 2,
**dadurch gekennzeichnet,**
**dass** ein Sensor im Bereich eines im Getränkeautomaten anordenbaren Behälters, insbesondere Wassertanks, Milchtanks, Milchkonzentratbehälters, Beutels, Transportbehälters, Tetrapaks^{®}, Milchtopfs, Aufschäumtopfs oder Thermoskanne angeordnet ist.

4. Getränkeautomat nach einem der Ansprüche 1 bis 3,
**dadurch gekennzeichnet,**
**dass** der wenigstens eine Sensor vollständig in ein Material des Behälters oder der Leitung oder in eine Wand des Behälters bzw. in eine Wand eines Schäumkopfes des Milchschäumers eingebettet ist.

5. Getränkeautomat nach Anspruch 3 oder 4,
**dadurch gekennzeichnet,**
**dass** zumindest ein Sensor zur Identifikation des Behälters, in den er eingebettet ist, ausgebildet ist.

6. Getränkeautomat nach einem der vorhergehenden Ansprüche,
**dadurch gekennzeichnet,**
**dass** der zumindest eine Sensor als aktiver oder als passiver RFID-Chip ausgebildet ist.

7. Getränkeautomat nach einem der Ansprüche 1 bis 6,
**dadurch gekennzeichnet,**
**dass** der zumindest eine Sensor einen Datenspeicher aufweist.

8. Getränkeautomat nach einem der Ansprüche 1 bis 7,
**dadurch gekennzeichnet,**
**dass** der zumindest eine Sensor zur Erfassung zumindest einer weiteren Messgrößen, wie beispielsweise Druck, Entfernung, Dichte oder Feuchtigkeit ausgebildet ist.

9. Getränkeautomat nach einem der Ansprüche 1 bis 8,
**dadurch gekennzeichnet,**
**dass** der Getränkeautomat ein Peripheriegerät, wie beispielsweise einen Beistellkühler aufweist, in welchem ein derartiger Sensor angeordnet ist.

## Claims

1. A beverage machine, in particular a coffee machine, comprising at least one line, a container, a milk frother, a control device, a signal receiver as well as comprising at least one sensor for detecting the temperature, which is embodied for wireless data transfer, **characterized in that**
- the temperature sensor is embodied as RFID chip and is arranged directly at a frothing head of the milk frother for detecting a milk temperature,
- the temperature sensor is able to measure the temperature, which is currently present at that location and to transfer it directly to the control device, which thereupon adjusts the frothing process.

2. The beverage machine according to claim 1,
**characterized in**
**that** a sensor, which is embodied as RFID chip, is arranged in the area of a line, which guides water or milk, for temperature detection.

3. The beverage machine according to claim 2,
**characterized in**
**that** a sensor is arranged in the area of a container, which can be arranged in the beverage machine, in particular water tank, milk tank, milk concentration container, bag, transport container, Tetrapak®, milk pan, frothing pot or thermos flaks.

4. The beverage machine according to one of claims 1 to 3,
**characterized in**
**that** the at least one sensor is embedded completely into a material of the container or of the line or into a wall of the container or into a wall of a frothing head, respectively, of the milk frother.

5. The beverage machine according to claim 3 or 4,
**characterized in**
**that** at least one sensor is embodied for identifying the container, into which it is embedded.

6. The beverage machine according to one of the preceding claims,
**characterized in**
**that** the at least one sensor is embodied as active or as passive RFID chip.

7. The beverage machine according to one of claims 1 to 6,
**characterized in**
**that** the at least one sensor encompasses a data storage.

8. The beverage machine according to one of claims 1 to 7, **characterized in**
**that** the at least one sensor is embodied for detecting at least one further measured variable, such as pressure, distance, density or moisture, for example.

9. The beverage machine according to one of claims 1 to 8, **characterized in**
**that** the beverage machine encompasses a peripheral device, such as an auxiliary cooler, in which such a sensor is arranged.

## Revendications

1. Distributeur de boissons, notamment distributeur de café, avec au moins un conduit, un réservoir, un émulsionneur de lait, un système de commande, un récepteur de signaux, ainsi qu'avec au moins un capteur pour la détection de température qui est conçu pour une transmission de données sans fil, **caractérisé en ce que**
- le capteur de température est conçu en tant que puce RFID et placé directement sur une tête émulsionneuse de l'émulsionneur de lait pour la détection d'une température du lait,
- le capteur de température est apte à mesurer la température qui y règne actuellement et à la transmettre directement au système de commande, qui suite à cela pos-régule le processus d'émulsion.

2. Distributeur de boissons selon la revendication 1, **caractérisé en ce qu'**un capteur conçu en tant que puce RFID pour la détection de température est placé dans la zone d'un conduit guidant de l'eau ou du lait.

3. Distributeur de boissons selon la revendication 2, **caractérisé en ce qu'**un capteur est placé dans la zone d'un réservoir pouvant être placé dans le distributeur de boissons, notamment d'un réservoir d'eau, d'un réservoir de lait, d'un réservoir de lait concentré, d'un sachet, d'un réservoir de transport, d'un Tetraprak®, d'un pot de lait, d'un pot émulsionneur ou d'une bouteille thermos.

4. Distributeur de boissons selon l'une quelconque des revendications 1 à 3, **caractérisé en ce que** l'au moins un capteur est entièrement incorporé dans une matière du réservoir ou du conduit ou dans une paroi du réservoir ou dans une paroi d'une tête émulsionneuse de l'émulsionneur de lait.

5. Distributeur de boissons selon la revendication 3 ou la revendication 4, **caractérisé en ce qu'**au moins un capteur est conçu pour l'identification du réservoir dans lequel il est incorporé.

6. Distributeur de boissons selon l'une quelconque des revendications précédentes, **caractérisé en ce que** l'au moins un capteur est conçu en tant que puce RFID active ou passive.

7. Distributeur de boissons selon l'une quelconque des revendications 1 à 6, **caractérisé en ce que** l'au moins un capteur comporte une mémoire de données.

8. Distributeur de boissons selon l'une quelconque des revendications 1 à 7, **caractérisé en ce que** l'au moins un capteur est conçu pour détecter au moins une dimension de mesure supplémentaire, comme par exemple une pression, une distance, une densité ou une humidité.

9. Distributeur de boissons selon l'une quelconque des revendications 1 à 8, **caractérisé en ce que** le distributeur de boissons comporte un périphérique, comme par exemple un refroidisseur additif, dans lequel un capteur de ce type est placé.
